Europäisches Patentamt

European Patent Office

Office européen des brevets

(19)

(11) Publication number: **0 283 446 B1**

## (12) EUROPEAN PATENT SPECIFICATION

(45) Date of publication of patent specification:
23.10.91 Bulletin 91/43

(51) Int. Cl.⁵: **B60S 3/06**

(21) Application number: 88830098.5

(22) Date of filing: 14.03.88

(54) Automatic vehicle washing and drying apparatus.

(30) Priority: 18.03.87 IT 1974387

(43) Date of publication of application:
21.09.88 Bulletin 88/38

(45) Publication of the grant of the patent:
23.10.91 Bulletin 91/43

(84) Designated Contracting States:
AT BE CH DE ES FR GB GR LI LU NL SE

(56) References cited:
CH-A- 555 707
DE-A- 3 208 527
FR-A- 2 409 889

(56) References cited:
PATENT ABSTRACTS OF JAPAN vol. 9, no.
272 (M–425)(1995) 30 October 1985, & JP-A-60
116542 (MARUYAMA KOGYO KK) 24 June
1985,
PATENT ABSTRACTS OF JAPAN vol. 9, no. 11
(M--351)(1734) 18 January 1985, & JP-A-59
160648 (DAIFUKU KIKO KK) 11 September
1984,

(73) Proprietor: CECCATO & C. S.P.A.
Via Battaglia 1
I-36041 Alte Ceccato di Montecchio Maggiore
(Vicenza) (IT)

(72) Inventor: Voutchinitch, Pavle
Via della Piazza Vecchia 2
I-36041 Montecchio Maggiore Vicenza (IT)

(74) Representative: Rapisardi, Mariacristina, Dr.
Proc.
STUDIO TECNICO LEGALE RAPISARDI Largo
V Alpini 15
I-20145 Milano (IT)

EP 0 283 446 B1

## Description

The present invention relates to an automatic vehicle washing and drying apparatus.

As is known, automatic apparatuses for the washing and drying of vehicles in general, such as for example cars, trains, trucks, buses, industrial and military vehicles and the like, are currently structured so as to detect the presence of the vehicles by means of devices associated with one or more large cleaning brushes.

These devices, for example, can be activated by the variation of the inclination of said brush in contact with the surface to be washed of the vehicle, or by means of the measurement of the electric current absorbed by the electric motor for the rotation of the brush or again by means of positional sensors.

For the other components of the apparatus, for example, for the drying outlets and for the fluid dispensing nozzle bearing tubes, for which it is desired to exclude their contact or that of any sensors with the bodywork of the vehicle, a plurality of photocells is used, usually three, which moving rigidly together for example with the drying outlets read in real time the obstacles defined by the configuration of the vehicle, keeping said outlets substantially equidistant from the bodywork during the dispensing of the airflow.

In this type of apparatuses, it often occurs, however, that the brushes, in the washing step, temporarily lose contact with the surface of the vehicle, determining thereby a deterioration of the washing effect, while regarding the drying outlets, not in direct contact with the bodywork of the vehicle, a possible excessive spacing thereof from the bodywork determines a deterioration of the drying effect.

DE-A-3208527 discloses an automatic vehicle washing and drying apparatus as defined in the pre-characterizing part of claim 1. In said patent the detection means of the vehicle shape are not supported by at least one of the active cleaning and/or dispensing elements and are not moved with them.

The aim proposed by the present invention is to eliminate the above described disadvantages by providing an automatic vehicle washing and drying apparatus which allows the detection of the shape of the vehicle contemporaneously with the movement of the active cleaning and/or drying and dispensing elements during their work over said vehicle.

Within the scope of this aim, an important object of the invention is to provide an automatic vehicle washing and drying apparatus which allows an exact positioning of the washing and drying devices with respect to the surface to be washed, these last not being affected by disturbance agents.

A further object of the invention is to provide an automatic vehicle washing and drying apparatus which allows to have a close correlation between the variable speed of the vehicle washing operation and the various relative movements of the washing and drying devices with respect thereto.

A further object of the invention is to provide an automatic vehicle washing and drying apparatus which is extremely simplified in operation, together with its valid operational reliability.

Not least object of the invention is to provide an automatic vehicle washing and drying apparatus which has modest costs and has reduced operating and maintenance expenses.

This aim, as well as these and other objects, are achieved by an automatic vehicle washing and drying apparatus as defined in the characterizing part of claim 1.

Further developments in line with claim 1 are referred to in the dependent claims 2 to 8.

Further characteristics and advantages of the invention will become apparent from the description of a preferred, but not exclusive, embodiment of the automatic vehicle washing and drying apparatus according to the invention, illustrated only by way of non-limitative example in the accompanying drawings, wherein :

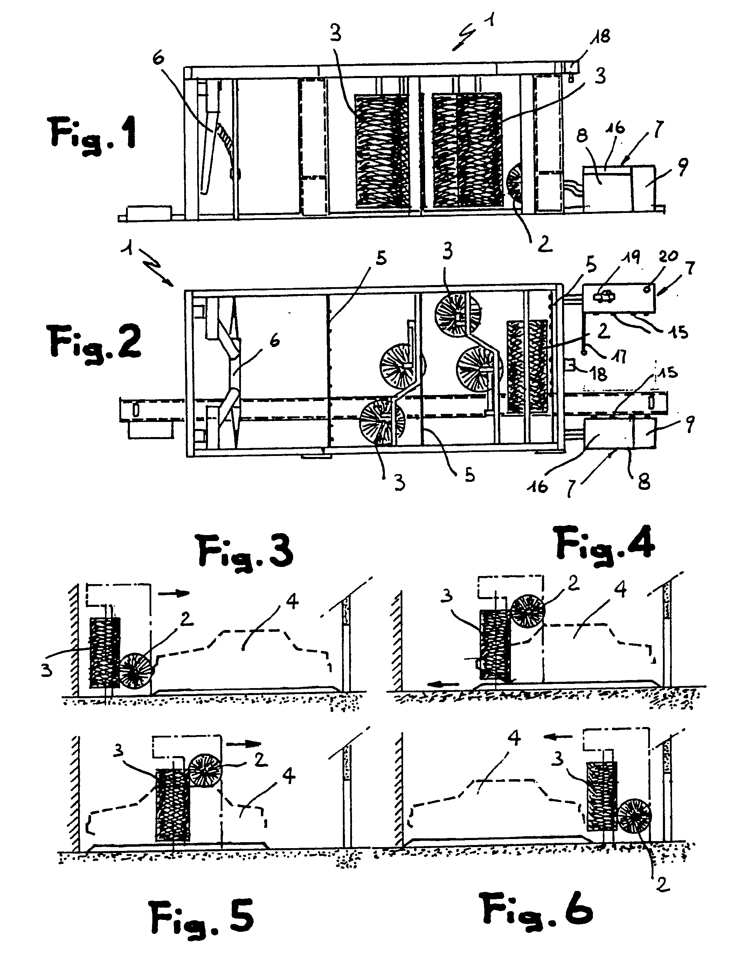

figure 1 is a schematic lateral elevation view of the apparatus according to the invention ;
figure 2 is a schematic plan view of the apparatus of figure 1 according to the invention ; and
figures 3, 4, 5 and 6 are schematic views of the path of the cleaning brushes according to a memorized shape of a vehicle according to the invention.

With particular reference to the above described figures, the apparatus according to the invention, generally indicated by the reference numeral 1, comprises for example in the chosen example one or more active cleaning elements and more in detail horizontal and vertical cleaning brushes, respectively indicated at 2 and 3, capable of removing dirt from a vehicle 4.

The apparatus furthermore provides fluid dispensing elements, indicated at 5, such as for example may be detergents, wax and the like, and vehicle drying elements and more precisely drying outlets 6.

Advantageously, the apparatus is provided with means, generally indicated at 7, for the detection of the shape of the vehicle 4 which are adapted to actuate, besides the various devices useful for performing the vehicle washing operation, the cleaning brushes 2 and 3 and the drying outlets 6 selectively or simultaneously along an envelope of readout points defining a profile substantially identical to the shape of the vehicle 4.

The detection means automatically read the shape of the vehicle along three dimensions and comprise readout elements 8 such as may be for example mechanical probes 17, photoelectric cells 15, ultrasound devices 16, lasers or TV circuits comprising TV cameras 18.

The readout elements 8 cooperate with a data processing device, for example a known data processor 9 so that the latter is capable of exactly memorizing the shape of the vehicle which is presented for washing.

When the vehicle, whose shape has been memorized, is introduced into the washing apparatus 1, the processor 9 sends a number of impulses capable of actuating the execution of the positioning of the active elements and that is to say of the brushes 2 and 3, of the nozzle-bearing tubes 5 and of the drying outlets 6 in succession and according to a scale preselected along a line connecting all the points corresponding to the readout points, causing the following of a profile identical to the previously memorized shape of the vehicle and with a preset scale so as to optimize the pressure of the brushes and the distance of the drying outlets with respect to the surface of the bodywork of said vehicle.

The readout points, constituting the profile of the vehicle, may be recalled by means of the processor 9 every time the execution of successive repetitive operations becomes necessary during the direct or reverse washing sequence.

The shape of the vehicle which has been memorized can furthermore be stored in memory until the conclusion of the washing cycle and subsequently erased, or at the end of the cycle the shape is left in memory to be used, by means of the manual intervention of an operator, by means of an activation and/or instruction punched card or of a pushbutton 20, when a vehicle with a shape identical to the previously memorized one is presented to the apparatus.

Conveniently, the washing apparatus has a correlation, at preset and variable intervals, between the readout points defining the profile of the vehicle and the positioning of the active cleaning elements and the drying outlets according to the positioning of said vehicle.

The means for the detection of the shape of the vehicle can, for example in a constructive variation, be directly associated with one or more cleaning brushes so that the profile which these last execute during a first washing of the vehicle can be stored so as to automatically determine the shape thereof and therefore, by means of the data processor, subsequently allow the actuation of all the other cleaning elements according to said shape.

The shape of the vehicle can be, according to the type of apparatus, detected before it passes in the washing apparatus or again by means of drawings which are introduced in the data processor or of two- or three-dimensional templates 19 representing the shape of the vehicle.

The operation of the washing apparatus according to the invention is evident from what has been described and illustrated.

In practice it has been furthermore observed that the abovesaid apparatus according to the invention is particularly advantageous to allow the detection of the shape of a vehicle along two or three cartesian axes so as to be able to successively correctly position the various washing and drying devices at an optimum distance and with optimum pressure with respect to the bodywork of the vehicle, so as to optimize the washing thereof with no danger of spoiling the painting and with no conditioning, which may make the washing more uncertain, due to disturbing agents such as may be readouts by means of photocells during the nebulization of large amounts of pressurized water.

In the apparatus according to the invention the ability to detect the shape of the vehicle in unperturbed regions ensures an accurate detection thereof, modifiable as desired according to the requirements in preset and constant conditions which exclude casual interferences.

Moreover, the readout performed in advance with respect to the entry of the vehicle in the washing apparatus and the memorization of the shape thereof allows to execute the washing operation with a reduced number of sensor elements and to successively drive by means of this memory all the remaining active elements, selectively and/or totally.

In practice, the materials employed, as well as the dimensions, may be any according to the requirements and to the state of the art.

## Claims

1. Automatic vehicle washing and drying apparatus comprising : at least one moving gate supporting cleaning brushes or active elements (2, 3) for the cleaning of the vehicle (4) assisted by elements (5) for the dispensing of fluids on said vehicle and by elements (6) for the drying of said vehicle, means (7) for the detection of the shape of said vehicle for the actuation of said cleaning (2, 3), dispensing (5) and drying (6) elements along a profile substantially identical to said shape, characterized in that said detection means (7) are supported by at least one of said active cleaning (2, 3) and/or drying (6) and/or dispensing elements so that said detection means are moved together with said active cleaning and/or drying and/or dispensing elements during their work over said vehicle for automatically detecting said shape along at least three dimensions.

2. Automatic apparatus according to one or more of the preceding claims, characterized in that said detection means comprise photocells (15).

3. Automatic apparatus according to one or more of the preceding claims, characterized in that said detection means comprise an ultrasound device (16).

4. Automatic apparatus according to one or more of the preceding claims, characterized in that said detection means comprise mechanical probes (17).

5. Automatic apparatus according to one or more of the preceding claims, characterized in that said detection means comprise TV circuits equipped with TV cameras (18).

6. Automatic apparatus according to one or more of the preceding claims, characterized in that said detection means (7) are adapted to detect said shape from a scape template (19) with planar or three-dimensional configuration.

7. Automatic apparatus according to one or more of the preceding claims, characterized in that said shape is kept in a data processing memory until the end of the operation of washing and drying of said vehicle in order to be used several times by means of the manual intervention of an operator using a card or a control button (20).

8. Automatic apparatus according to one or more of the preceding claims, characterized in that said profile is manually variable in order to vary the distance of said active cleaning and/or drying elements from said vehicle.

**Patentansprüche**

1. Automatische Fahrzeugwasch- und -trockenanlage, die mindestens ein sich bewegendes Portal, das Reinigungsbürsten oder aktive Elemente (2, 3) zum durch Elemente (5) für die Abgabe von Fluiden auf das Fahrzeug und durch Elemente (6) zum Trocknen des Fahrzeugs unterstützten Reinigen des Fahrzeugs (4) trägt, und Mittel (7) zum Detektieren der Gestalt des Fahrzeugs für die Betätigung der Reinigungselemente (2, 3), Abgabeelemente (5) und Trocknungselemente (6) entlang einem der Gestalt im wesentlichen identischen Profil enthält, dadurch gekennzeichnet, daß die Detektionsmittel (7) von mindestens einem der aktiven Reinigungselemente (2, 3) und/oder Trocknungselemente (6) und/oder Abgabeelemente getragen werden, so daß die Detektionsmittel zusammen mit den aktiven Reinigungs-, und/oder Trocknungs- und/oder Abgabeelementen während ihres Betriebs zum automatischen Detektieren der Gestalt entlang von mindestens drei Dimensionen über das Fahrzeug bewegt werden.

2. Automatische Anlage nach einem oder mehreren der vorstehenden Ansprüche, dadurch gekennzeichnet, daß die Detektionsmittel Photozellen (15) enthalten.

3. Automatische Anlage nach einem oder mehreren der vorstehenden Ansprüche, dadurch gekennzeichnet, daß die Detektionsmittel eine Ultraschallvorrichtung (16) enthalten.

4. Automatische Anlage nach einem oder mehreren der vorstehenden Ansprüche, dadurch gekennzeichnet, daß die Detektionsmittel mechanische Fühler (17) enthalten.

5. Automatische Anlage nach einem oder mehreren der vorstehenden Ansprüche, dadurch gekennzeichnet, daß die Detektionsmittel mit TV-Kameras (18) versehene TV-Schaltkreise enthalten.

6. Automatische Anlage nach einem oder mehreren der vorstehenden Ansprüche, dadurch gekennzeichnet, daß die Detektionsmittel (7) zum Detektieren der Gestalt von einer Maßschablone mit planarer oder dreidimensionaler Konfiguration her ausgebildet sind.

7. Automatische Anlage nach einem oder mehreren der vorstehenden Ansprüche, dadurch gekennzeichnet, daß die Gestalt bis zum Ende des Wasch- und Trocknungsvorgangs des Fahrzeugs in einem Prozeßdatenspeicher gespeichert bleibt, um mittels eines manuellen Eingreifens einer eine Karte oder einen Kontrollknopf (20) benutzenden Bedienungsperson mehrmals verwendet zu werden.

8. Automatische Anlage nach einem oder mehreren der vorstehenden Ansprüche, dadurch gekennzeichnet, daß das Profil manuell veränderbar ist, um den Abstand der aktiven Reinigungs- und/oder Trocknungselemente von dem Fahrzeug zu variieren.

**Revendications**

1. Dispositif de lavage et de séchage de véhicule comprenant : au moins un portique mobile supportant des brosses de nettoyage ou éléments actifs (2, 3) pour le nettoyage du véhicule (4), ces éléments actifs étant complétés par des éléments (5) destinés à distribuer des fluides sur le véhicule, et par des éléments (6) destinés à sécher le véhicule, et des moyens (7) pour détecter la forme du véhicule de manière à actionner les éléments de nettoyage (2, 3), de distribution (5) et de séchage (6) suivant un profil sensiblement identique à la forme du véhicule, dispositif caractérisé en ce que les moyens de détection (7) sont supportés par l'un au moins des éléments actifs de nettoyage (2, 3) et/ou des éléments de séchage (6) et/ou de distribution (5), de façon que ces moyens de détection soient déplacés solidairement des éléments actifs de nettoyage et/ou des éléments de séchage et/ou des éléments de distribution pendant leur travail sur le véhicule, pour détecter ainsi automatiquement la forme du véhicule suivant au moins trois dimensions.

2. Dispositif automatique suivant la revendication précédente, caractérisé en ce que les moyens de détection comprennent des cellules photoélectriques (15).

3. Dispositif automatique selon l'une ou plusieurs des revendications précédentes, caractérisé en ce que les moyens de détection comprennent un dispositif à ultrasons (16).

4. Dispositif automatique selon l'une ou plusieurs des revendications précédentes, caractérisé en ce que les moyens de détection comprennent des détecteurs mécaniques (17).

5. Dispositif automatique selon l'une ou plusieurs des revendications précédentes, caractérisé en ce que les moyens de détection comprennent des circuits de télévision équipés de caméras de télévision (18).

6. Dispositif automatique selon l'une ou plusieurs des revendications précédentes, caractérisé en ce que les moyens de détection (7) sont conçus pour détecter la forme du véhicule à partir d'un gabarit à échelle réduite (19) présentant une configuration plane ou à trois dimensions.

7. Dispositif automatique selon l'une ou plusieurs des revendications précédentes, caractérisé en ce que la forme du véhicule est conservée dans une mémoire de traitement de données jusqu'à la fin de l'opération de lavage et de séchage du véhicule, de manière à être utilisée plusieurs fois grâce à l'intervention manuelle d'un opérateur utilisant une carte ou un bouton de commande (20).

8. Dispositif automatique selon l'une ou plusieurs des revendications précédentes, caractérisé en ce qu'on peut faire varier manuellement le profil de manière à faire varier la distance de l'élément actif de nettoyage et/ou de l'élément de séchage, par rapport au véhicule.

EP 0 283 446 B1

Fig.1

Fig.2

Fig.3

Fig.4

Fig.5

Fig.6